# EUROPEAN PATENT APPLICATION

(11) **EP 4 711 891 A1**
(43) Date of publication of application: **18.03.2026**
(21) Application number: 25192957.6
(22) Date of filing: 30.07.2025
(51) Int. Cl.: G06F 1/16, G09F 9/33

(54) **DISPLAY DEVICE**

(30) Priority: 13.09.2024 KR 20240125540
(71) Applicant: LG Display Co., Ltd., Seoul, 07336 (KR)
(72) Inventor: KWON, Dohyun, 10845 Paju-si (KR); SIM, Wangeon, 10845 Paju-si (KR)
(74) Representative: Morrall, Jonathan Ian McLachlan

(57) **Abstract**

The present disclosure relates to a display device including a spline area in a respective corner.

To realize this, the display device of the present disclosure may have a support substrate (145) bonded to a display panel (100) and having four spline areas (SPA1 to SPA4) respectively corresponding to four arc-shaped corners of the display panel (100), and the spline areas may have respective a hole patterns (PT) formed therein.

Thereby, during the bonding of the support substrate (145) and the display panel (100), the bonding pressure can be absorbed by the hole patterns (PT) formed in the respective spline areas (SPA1-SPA4) of the support substrate (145), thus preventing the occurrence of wrinkle or displacement in the support substrate (145).

## Description

### Technical Field

The present disclosure relates to a display device.

### Description of Related Art

In general, display devices may be classified into organic light-emitting display (OLED) devices having self-luminous properties, and liquid crystal display (LCD) devices requiring a separate light source.

Recently, display devices including a light-emitting diode (LED) (hereinafter, referred to as a "light-emitting element") are attracting attention as next-generation display devices. Each light emitting element may be disposed in an active area (AA) of a display panel.

As an example, the display panel may be attached with a cover member to protect a plurality of light emitting elements. The cover member may be disposed to cover the front surface of the display panel, and serve to protect the display panel from external impact.

Additionally, the display device may have a support substrate attached in the lower side of the display panel to reinforce the rigidity of the display panel.

The description provided in the background section should not be assumed to be prior art merely because it is mentioned in or associated with the background section. The background section may include information that describes one or more aspects of the subject technology.

### SUMMARY

However, there is a problem that when the support substrate is attached to the display panel, pressure is applied to each corner of the substrate, causing the occurrence of winkles or displacements therein.

In order to address the above-mentioned drawback, the inventors of the present invention invented a display device capable of reducing or preventing the wrinkles or displacements in the support substrate, which are occurred when attaching the support substrate to the display panel.

An object to be achieved according to an exemplary embodiment of the present disclosure is to provide a display device in which during the bonding of the display panel and the support substrate, the pressure can be absorbed through hole patterns formed in respective corners of the support substrate.

The present disclosure may have other objects besides the aforementioned one, which are clearly recognizable to a person skilled in the art from the description below.

Furthermore, it will be readily appreciated that the objects and advantages of the present disclosure can be realized by the means presented in the claims, and combinations thereof.

A display device according to an exemplary embodiment of the present disclosure may include a display panel including four corners, each having an arc shape, a cover member disposed in an upper side of the display panel, and a support substrate disposed in a lower side of the display panel, and the support substrate may have four spline areas respectively corresponding to the four arc-shaped corners of the display panel, each spline area having a respective hole pattern formed therein.

According to an exemplary embodiment of the present disclosure, the support substrate having the hole patterns formed in the respective corners can be bonded to the display panel.

According to an exemplary embodiment of the present disclosure, during the bonding of the support substrate and the display panel, the pressure can be absorbed by the hole patterns formed in the respective spline areas of the support substrate, thus preventing the occurrence of wrinkle or displacement in the support substrate.

According to an exemplary embodiment of the present disclosure, it is possible to produce an effect of preventing defects in the display device by preventing the occurrence of wrinkles or displacements in the support substrate when bonding the support substrate with the display panel.

According to an exemplary embodiment of the present disclosure, it is possible to produce an effect of realizing a narrow bezel through prevention of product defects.

According to an exemplary embodiment of the present disclosure, it is possible to produce an effect of reducing the power consumption of the product through prevention of product defects associated with the occurrence of wrinkles or displacements in the support substrate, which would affect the operation of the display panel, thereby further increasing power consumption.

According to an exemplary embodiment of the present disclosure, it is possible to prevent the degradation of the lifespan of the display device through the reduction of power consumption of the product.

According to an exemplary embodiment of the present disclosure, there is an effect of providing a long-life, low-power display device by reducing the power consumption of the product and preventing the degradation of the lifespan of the product.

According to an exemplary embodiment of the present disclosure, the power consumption of the product can be reduced, so the reduction in the lifespan of the display panel can be alleviated, realizing the improvement of the quality of the display device.

In addition, the display device according to the present disclosure can ensure the improved quality and high product reliability by combining the display panel and the support substrate without defects.

The present disclosure may have other effects besides the aforementioned ones, which are clearly recognizable to a person skilled in the art from the description below.

In addition to the effects described above, specific effects of the present invention will be described below together with specific details for practicing the invention.

It is to be understood that both the foregoing general description and the following detailed description are exemplary and explanatory and are intended to provide further explanation of the inventive concepts as claimed.

### BRIEF DESCRIPTION OF DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a view showing a device to which a display device according to exemplary embodiments of the present disclosure is applied.
FIG. 2 is an exploded perspective view of a display device according to an exemplary embodiment of the present disclosure.
FIG. 3 is a view showing spline areas of a support substrate according to an exemplary embodiment of the present disclosure.
FIG. 4 is a view showing an example of applying pressure to a spline area according to an exemplary embodiment of the present disclosure.
FIG. 5 is a view showing the configuration of a hole pattern formed in a support substrate according to an exemplary embodiment of the present disclosure.
FIG. 6 is a cross-sectional view taken along line A-A' in FIG. 5.
FIG. 7 is a drawing showing interactions between elements when pressure is generated on a support substrate according to an exemplary embodiment of the present disclosure.
FIG. 8 is a view showing a hole pattern formed in an active area and a non-active area of a support substrate according to an exemplary embodiment of the present disclosure.
FIG. 9 is a view showing a cross-sectional structure of a support substrate according to an exemplary embodiment of the present disclosure.
FIG. 10 is a view showing a hole pattern formed in a first spline area of a support substrate according to an exemplary embodiment of the present disclosure.
FIG. 11 is a view showing a hole pattern formed in a second spline area of a support substrate according to an exemplary embodiment of the present disclosure.
FIG. 12 is a view showing a hole pattern formed in a fourth spline area of a support substrate according to an exemplary embodiment of the present disclosure.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTIONS

Reference will now be made in detail to embodiments of the present disclosure, examples of which may be illustrated in the accompanying drawings. In the following description, when a detailed description of well-known functions or configurations related to this document is determined to unnecessarily cloud a gist of the inventive concept, the detailed description thereof will be omitted. The progression of processing steps and/or operations described is an example; however, the sequence of steps and/or operations is not limited to that set forth herein and may be changed as is known in the art, with the exception of steps and/or operations necessarily occurring in a particular order. Names of the respective elements used in the following explanations may be selected only for convenience of writing the specification and may be thus different from those used in actual products.

Advantages and features of the present disclosure, and a method of achieving the advantages and features will become apparent when referring to the following embodiments described later in detail together with the accompanying drawings. However, the present disclosure is not limited to the embodiments as disclosed below, but may be embodied in various different forms. Thus, these embodiments are set forth only to make the present disclosure complete, and to completely inform the scope of the present disclosure to those of ordinary skill in the technical field to which the present disclosure belongs. Further, the present disclosure is only defined by scopes of claims.

A shape (e.g., sizes, lengths, widths, heights, thicknesses, locations, radii, diameters, and areas, a ratio, an angle, a number, etc. disclosed in the drawings for illustrating embodiments of the present disclosure are illustrative, and the present disclosure is not limited thereto. Throughout the detailed description, like reference symbols refer to like components. Further, in describing the present disclosure, if it is determined that a detailed description of a related known technology may unnecessarily obscure the gist of the present disclosure, the detailed description thereof will be omitted. When the term "comprise", "include", "have", "is comprised of", or the like as mentioned herein is used, any other part may be added unless the term "only" is used. When using an expression in a singular form to describe a component, it can include a meaning of a plural form unless explicitly stated to the contrary.

It should be noted that any component will be construed as including a tolerance or error range, even if there is no explicit description thereof. Any implementation described herein as an "example" is not necessarily to be construed as preferred or advantageous over other implementations.

In describing a position relationship between two elements, for example, when the position relationship is described using "on", "above", "in an upper side", "below", "under", "in a lower side", "neighboring", "adjacent to", "next to", or the like, one or more other elements may be interposed between the two elements unless the term "just", "directly", or "close" is used.

In describing a temporal relationship, for example, when the temporal order is described as "after", "subsequent", "next", "before", or the like, the case which is not continuous may also be included unless the term "just" or "directly" is used.

The terms, such as "below," "lower," "above," "upper" and the like, may be used herein to describe a relationship between item(s) as illustrated in the drawings. It will be understood that the terms are spatially relative and based on the orientation depicted in the drawings.

It will be understood that, although the term "first", "second", or the like may be used herein to describe various elements, these elements should not be limited by these terms. These terms are only used to distinguish one element from another element. So, a first element referred to in the following description may represent a second element, without departing from the scope of the technical idea of the present disclosure.

In describing components herein, terms such as first, second, A, B, (a), or (b) may be used. These terms are only intended to distinguish one component from another, and do not limit the nature, order, sequence, or number of the components.

When a component is described as being "connected to," "bonded to," "coupled to," "access to," or "attached to" another component, such component may be directly connected to, coupled to, contact with, or attached to the other component, and, however, it should be understood that they may be indirectly connected to, bonded to, coupled to, access to, or attached to each other with still another component interposed therebetween, unless explicitly stated to the contrary.

When a component or layer is described as "being in contact with," or "overlapping with" another component or layer, such component or layer may directly be in contact with or overlap with the other component or layer, and, however, it should be understood that they may also indirectly be in contact with or overlap with each other with still another component or layer interposed between, unless explicitly stated to the contrary.

The expression "at least one" should be understood to include any combination of one or more of the associated components. For example, the meaning of "at least one of the first, second, and third components" may include not only the first, second, or third component, but also any combination of two or more of the first, second, and third components.

The terms "first direction", "second direction", "third direction", "X-axis direction", "Y-axis direction", and "Z-axis direction" should not be interpreted as merely geometric relationships in which the relationship between them is perpendicular to each other, but may mean a wider directionality within the range in which the configuration of the present disclosure can act functionally.

The individual features of the various embodiments of the present disclosure may be coupled or combined with each other in part or in whole to be interconnected and operated in a variety of technical ways, and each embodiment may be implemented independently of each other or implemented together in an associative relationship.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning for example consistent with their meaning in the context of the relevant art and should not be interpreted in an idealized or overly formal sense unless expressly so defined herein. For example, the term "part" or "unit" may apply, for example, to a separate circuit or structure, an integrated circuit, a computational block of a circuit device, or any structure configured to perform a described function as should be understood to one of ordinary skill in the art.

Hereinafter, various exemplary embodiments of the present disclosure will be described in detail with reference to the accompanying drawings.

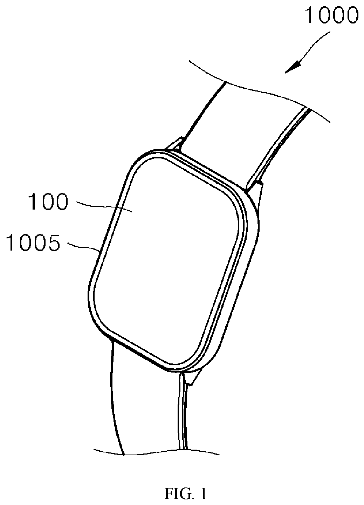

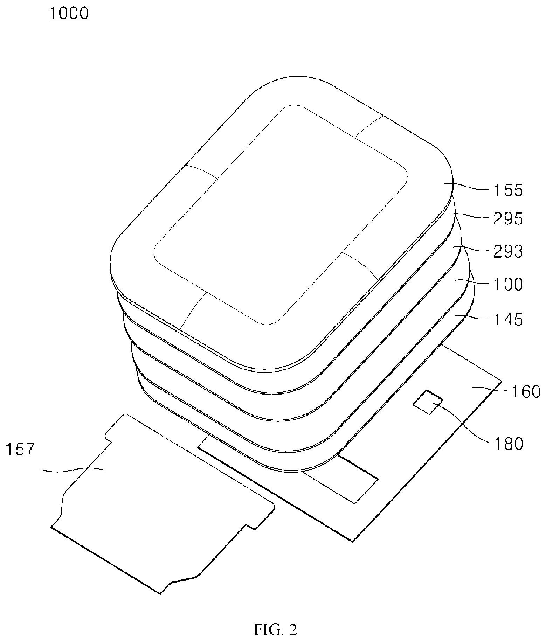

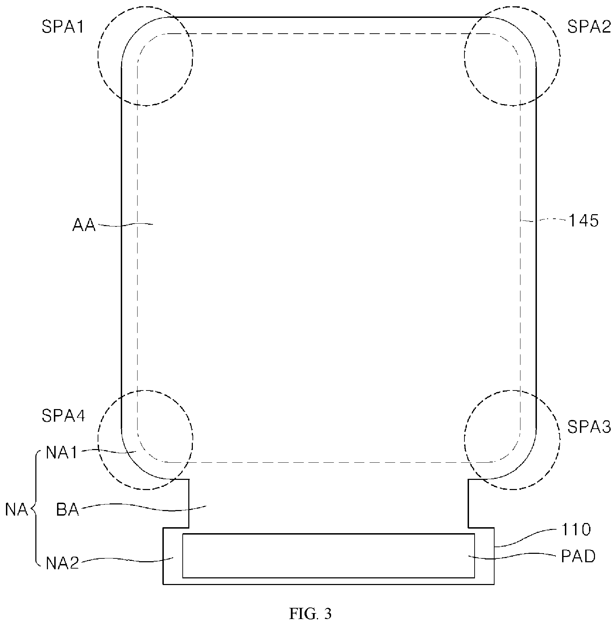

FIG. 1 is a view showing a device to which a display device according to various embodiments of the present disclosure is applied. FIG. 2 is an exploded perspective view of a display device according to an exemplary embodiment of the present disclosure. FIG. 3 is a view showing spline areas of a support substrate according to an exemplary embodiment of the present disclosure.

The display device 1000 according to the exemplary embodiments of the present disclosure may be included in various devices or electronic devices.

Referring to FIG. 1, as an example, the display device 1000 according to an exemplary embodiment of the present disclosure may be applied to, for example, a wearable apparatus such as a smart watch or a watch phone.

In the display device 1000 according to an exemplary embodiment of the present disclosure, a display panel 100 may be mounted to a case part 1005. The embodiments of the present disclosure are not limited to this.

Various examples of a device or electronic device including the display device 1000 according to exemplary embodiments of the present disclosure may include mobile devices, laptops, and monitors or TVs, but the embodiments of the present disclosure are not limited thereto.

The wearable device, mobile device, laptop, and monitor or TV may respectively include the case part 1005, the display panel 100 or the display device 1000 according to the exemplary embodiments of the present disclosure, without being limited thereto.

For example, the display device according to the exemplary embodiment of the present disclosure may be applied to a mobile device, a video phone, a smart watch, a watch phone, a wearable apparatus, a foldable apparatus, a rollable apparatus, a bendable apparatus, a flexible apparatus, a curved apparatus, a sliding apparatus, a variable apparatus, an electronic notebook, an electronic book, a portable multimedia player (PMP), a personal digital assistant (PDA), an MP3 player, a mobile medical device, a desktop PC, a laptop PC, a netbook computer, a workstation, a navigation system, a vehicle display device, a theater display device, a television, a wallpaper device, a signage device, a game device, a notebook, a monitor, a camera, a camcorder, home appliances, or the like.

Referring to FIGS. 1 to 3, a display device 1000 according to an exemplary embodiment of the present disclosure may include a display panel 100, a polarization layer 293, an adhesive layer 295, a cover member 155, a support substrate 145, a flexible circuit board 157, and a printed circuit board 160. Embodiments are not limited thereto. As an example, one or more of the above-mentioned components may be omitted, or one or more additional component may be further included.

For example, the display device 1000 may include a substrate 110. The substrate 110 may be a member that supports other components of the display device 1000. The substrate 110 may be configured with an insulating material. For example, the substrate 110 may be configured with glass or resin, without being limited thereto. As an example, the substrate 110 may be configured with a material having flexibility or a material having rigidity. For example, the substrate 110 may be configured with a plastic material having flexibility, such as polyimide (PI), polyethylene terephthalate (PET), polycarbonate (PC), acrylonitrile-butadiene-styrene copolymer (ABS), polymethyl methacrylate (PMMA), etc. However, the embodiments of the present disclosure are not limited to this.

The display panel 100 can implement information, video, and/or images to be provided to a user. For example, the display panel 100 may include an active area AA and a non-active area NA. For example, the substrate 110 may include the active area AA and the non-active area NA. The description for the active area AA and non-active area NA are not limited to the substrate 110, but may be applicable throughout the display device 1000.

The active area AA may be an area where an image is displayed. The active area AA may include a plurality of pixels. Each of the plurality of pixels may be constituted with a plurality of sub-pixels. In each of the plurality of sub-pixels a plurality of light-emitting elements may be disposed. The plurality of light-emitting elements may be configured differently depending on the kinds of display device 1000. For example, in a case where the display device 1000 is an inorganic light-emitting display device, the light-emitting element may be an LED (Light-emitting Diode), a Micro LED (Micro Light-emitting Diode), or a Mini LED (Mini Light-emitting Diode), but the embodiments of the present disclosure are not limited thereto.

The non-active area NA may be an area where an image is not displayed. As an example, the non-active area NA may be extended from the active area AA. As an example, the non-active area NA may fully or partially surround the active area AA, without being limited thereto. As an example, at least a portion or the entirety of the non-active area NA may be invisible from a front side of the display panel 100, for example, by being bent toward a rear side of the display panel 100, without being limited thereto. In the non-active area NA, various wirings and circuits for driving a plurality of pixels in the active area AA may be disposed. For example, in the non-active area NA, there may be disposed a pad part PAD on which various wirings and driving circuits may be mounted and to which integrated circuits and printed circuits are connected, but the embodiments of the present disclosure are not limited thereto.

For example, the driving circuit may be a data driving circuit and/or a gate driving circuit, but the embodiments of the present disclosure are not limited thereto. In the non-active area NA, there may be disposed wirings through which control signals for controlling the driving circuits are supplied. For example, the control signal may include various timing signals including synchronization signals, an input data enable signal, and a clock signal, but the embodiments of the present disclosure are not limited thereto. The control signal may be received through the pad part PAD. For example, in the non-active area NA, there may be disposed link wirings for transmitting a signal. For example, driving components such as the flexible circuit board 157 and the printed circuit board 160 may be connected to the pad part PAD.

According to an exemplary embodiment of the present disclosure, the non-active area NA may include a first non-active area NA1, a bending area BA, and a second non-active area NA2. For example, the first non-active area NA1 may be an area surrounding at least a portion of the active area AA. The bending area BA may be an area which is bendable and extends from at least one of a plurality of sides of the first non-active area NA1. The second non-active area NA2 may be an area which extends from the bending area BA, and in which the pad part PAD may be disposed. For example, the bending area BA may be in a bent state, and the remaining area of the substrate 110 except the bending area BA may be in a flat state, without being limited thereto. In this case, as the bending area BA is bent, the second non-active area NA2 can be located on the rear surface of the active area AA. However, the embodiments of the present disclosure are not limited to this.

The active area AA of the substrate 110 or the display device 1000 may be configured in various shapes depending on the designs of the display device 1000. For example, the active area AA may be configured in a rectangular shape with four rounded corners, but the embodiments of the present disclosure are not limited thereto. For another example, the active area AA may be configured in a rectangular shape with four right angles, a circular shape, or the like, but the embodiments of the present disclosure are not limited thereto.

According to an exemplary embodiment of the present disclosure, the width of the second non-active area NA2 in which a plurality of pad electrodes are disposed may be greater than the width of the bending area BA in which only the plurality of link wirings are disposed. Additionally, the width of the active area AA in which the plurality of sub-pixels are disposed may be greater than the width of the bending area BA in which only the plurality of link wirings are disposed. Although the width of the bending area BA is depicted in the drawing as being smaller than the widths of other areas of the substrate 110, the shape of the substrate 110 including such bending area BA is given only as an example, and the embodiments of the present disclosure are not limited thereto. As an example, the width of the second non-active area NA2 in which a plurality of pad electrodes are disposed, the width of the bending area BA in which only the plurality of link wirings are disposed, and the width of the active area AA in which the plurality of sub-pixels are disposed may be the same as each other, or different from each other, without being limited thereto.

Although not shown in the drawings, in the active area AA, there may be disposed a plurality of pixel driving circuits. The plurality of pixel driving circuits may be circuits for driving light-emitting elements of a plurality of sub-pixels. Each of the plurality of pixel driving circuits may include a plurality of transistors including a driving transistor, a storage capacitor and the like, and may control the light-emitting operation of the plurality of light-emitting elements by supplying a control signal, power, and a driving current to the light-emitting elements of the plurality of sub-pixels. For example, a pixel driving circuit may include a power wiring and a signal wiring for controlling the on/off and/or light-emitting time of a light-emitting element. For example, the plurality of pixel driving circuits may be driving drivers manufactured on a semiconductor substrate using a MOSFET (Metal-oxide-silicon field effect transistor) manufacturing process, but the embodiments of the present disclosure are not limited thereto. The driving driver may include a plurality of pixel driving circuits, and may drive a plurality of sub-pixels.

Referring to FIGS. 2 and 3 together, the flexible circuit board 157 and the printed circuit board 160 may be disposed at the lower side of the display panel 100. The flexible circuit board 157 and the printed circuit board 160 may be disposed at least on one edge of the display panel 100, but the embodiments of the present disclosure are not limited thereto. The flexible circuit board 157 may be attached to the display panel 100 at its one side, and to the printed circuit board 160 at another side thereof, but the embodiments of the present disclosure are not limited thereto. The flexible circuit board 157 may be configured with a flexible film, but the embodiments of the present disclosure are not limited thereto.

In the second non-active area NA2, the pad part PAD may be disposed, which includes the plurality of pad electrodes. To the pad part PAD, a driving component including one or more flexible circuit boards (or flexible films) 157 and the printed circuit boards 160 may be attached or bonded. The plurality of pad electrodes of the pad part PAD may be electrically connected to one or more flexible circuit boards (or flexible films) 157 to transmit various signals (or powers) from the printed circuit board 160 and the flexible circuit board (or flexible film) 157 to the plurality of pixel driving circuits in the active area AA.

The flexible circuit board (or flexible film) 157 may be configured with a film whose base film has a flexibility and is provided with various components disposed thereon. For example, the flexible circuit board (or flexible film) 157 may be provided with a driving IC such as a gate driving IC or a data driving IC disposed thereon, but the embodiments of the present disclosure are not limited thereto. The driving IC may be a kind of a component that processes data and driving signals for displaying an image. The driving IC may be disposed in a manner such as a Chip On Glass (COG), a Chip On Film (COF), or a Tape Carrier Package (TCP) depending on the mounting method, but the embodiments of the present disclosure are not limited thereto. The flexible circuit board (or flexible film) 157 may be attached or bonded onto the plurality of pad electrodes PE via a conductive adhesive layer, but the embodiments of the present disclosure are not limited thereto.

The printed circuit board 160 may be a kind of a component electrically connected to one or more flexible circuit boards (or flexible films) 157 to supply signals to the driving IC. The printed circuit board 160 may be disposed at one side of the flexible circuit board (or flexible film) 157 to be electrically connected to the flexible circuit board (or flexible film) 157. On the printed circuit board 160, there may be disposed a range of components for supplying various signals to the driving IC. For example, on the printed circuit board 160 a variety of components, including a timing controller, a power supply, a memory, a processor, or the like, may be disposed. For example, the printed circuit board 160 may be provided with a power management integrated circuit PMIC, but the embodiments of the present disclosure are not limited thereto.

The printed circuit board 160 may include at least one hole 180, but the embodiments of the present disclosure are not limited thereto. In an area corresponding to at least one hole 180, there may be disposed an internal component detecting ambient light, temperature or the like, which may be provided with a plurality of sensors. For example, the internal component may include an ambient light sensor (ALS) or a temperature sensor, but embodiments of the present disclosure are not limited thereto. For example, the hole 180 may be a kind of a permeable hole, but the embodiments of the present disclosure are not limited thereto. As an example, the hole 180 may be omitted depending on the design.

Referring to FIG. 2, the polarization layer 293 may be disposed on the display panel 100. The polarization layer 293 can reduce, prevent or alleviate a phenomenon in which the light generated by an external light source enters the inside of the display panel 100 and affects the light-emitting element or the like. As an example, the polarization layer 293 may be omitted depending on the design.

The cover member 155 may be disposed on the polarization layer 293. The cover member 155 may include a transparent material. For example, the cover member 155 may include a cover glass made of glass, or a plastic material, without being limited thereto. The cover member 155 may be a member for protecting the display panel 100. The adhesive layer 295 may be disposed between the polarization layer 293 and the cover member 155. By the adhesive layer 295, the cover member 155 can be attached to the display panel 100. The adhesive layer 295 may include an optically clear adhesive (OCA), an optically clear resin (OCR), a pressure sensitive adhesive (PSA), or the like, but the embodiments of the present disclosure are not limited thereto. As an example, the adhesive layer 295 may be omitted depending on the design. As an example, the cover member 155 can be attached to the display panel 100 without the adhesive layer 295, without being limited thereto.

As an example, the display panel 100 may include four corners, each having an arc shape. For example, each corner of the display panel 100 may be formed in a round shape. Embodiments are not limited thereto. As an example, the display panel 100 may include three or more corners. As an example, at least one of all of the three or more corners may have an arc shape. As an example, at least one of all of the three or more corners may be formed in a round shape, without being limited thereto.

The cover member 155 may be disposed on the upper side of the display panel 100 to protect the display panel 100.

The support substrate 145 may be disposed between the display panel 100 and the printed circuit board 160. The support substrate 145 can reinforce the rigidity of the display panel 100. The support substrate 145 may be a kind of a back plate, but the embodiments of the present disclosure are not limited thereto. As an example, the support substrate 145 may be omitted or may be integrated with the display panel 100, without being limited thereto.

The support substrate 145 may be disposed under the display panel 100 to serve to support the display panel 100.

As an example, the support substrate 145 may have four spline areas SPA1 to SPA4 respectively corresponding to the arc-shaped four corners of the display panel 100. Each spline area is an area having an arc shape at each of the four corners of the support substrate 145. For example, each spline area is an area having an arc shape where the horizontal side and the vertical side meet on the support substrate (145). In each of the spline areas SPA1 to SPA4, a respective hole pattern PT may be formed. Embodiments are not limited thereto. As an example, the support substrate 145 may have at least one spline area corresponding to the at least one arc-shaped corner of the display panel 100. As an example, in the at least one spline area, a respective hole pattern PT may be formed.

As shown in FIG. 3, the four spline areas SPA1 to SPA4 may include a first spline area SPA1 positioned on the upper left, a second spline area SPA2 positioned on the upper right, a third spline area SPA3 positioned on the lower right, and a fourth spline area SPA4 positioned on the lower left.

As an example, the support substrate 145 may have two horizontal sides parallel to each other, and two vertical sides parallel to each other, without being limited thereto. The horizontal sides may have a different length from that of the vertical sides. For example, the vertical sides may be formed to be longer than or smaller than the horizontal sides, without being limited thereto.

However, the embodiments of the present disclosure are not limited to this. For example, the support substrate 145 may have horizontal and vertical sides of the same length.

In the support substrate 145, the first spline area SPA1 may be disposed on the upper left where the horizontal side and the vertical side meet with each other, and the second spline area SPA2 may be disposed on the upper right where the horizontal side and the vertical side meet with each other.

Additionally, in the support substrate 145, the third spline area SPA3 may be disposed on the lower right where the vertical side and the horizontal side meet with each other, and the fourth spline area SPA4 may be disposed on the lower left where the vertical side and the horizontal side meet with each other.

The support substrate 145 may be disposed under the display panel 100, and attached to the display panel 100 via an adhesive member. When being attached to the display panel 100, the support substrate 145 can be accurately attached and bonded to the display panel 100, for example, through a plurality of direct bonding keys (DBKs) in the non-active area NA of the display panel 100, without being limited thereto.

At least one or each one of the plurality of direct bonding keys (DBKs) may be positioned in each outer area of a trimming line, which faces each corner of the substrate 110. For example, the plurality of direct bonding keys (DBKs) may be comrised of four alignment key patterns, each being disposed at a respective one of the four corners of the substrate 110, without being limited thereto.

As an example, the plurality of direct bonding keys (DBKs) may include a metal material, without being limited thereto. As an example, the plurality of direct bonding keys (DBKs) may be formed by disposing on a metal material a black matrix with a plurality of openings so that the metal material is exposed through the openings of the black matrix, without being limited thereto.

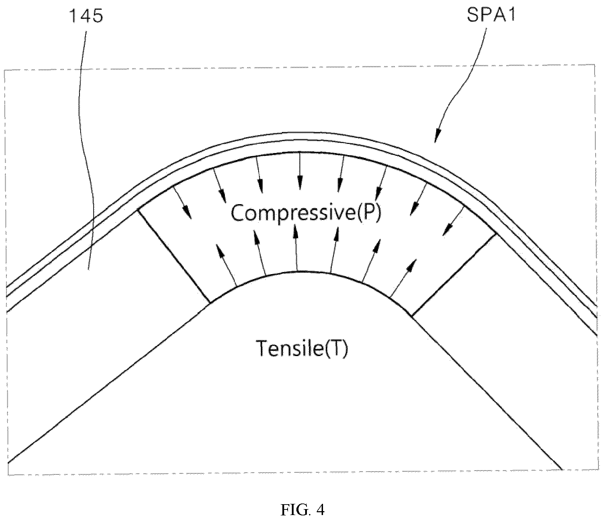

When the support substrate 145 is attached to the display panel 100, as shown in FIG. 4, pressure P for bonding attachment is applied, and the horizontal and vertical sides and the spline area (e.g., SPA1) are subjected to being bent toward the direction in which they are attached to the display panel 100. FIG. 4 is a view showing an example of applying pressure to a spline area according to an exemplary embodiment of the present disclosure. As an example, the support substrate 145 may undergo tensile stress T due to tensile force in the active area, and compressive stress P due to compressive force in the non-active area. Embodiments are not limited thereto. As an example, the boundary between the area undergoing the tensile stress T and the area undergoing the compressive stress P may not exactly correspond to the boundary between the active area and the non-active area. As an example, the area undergoing the tensile stress T may be located inside the area undergoing the compressive stress P, without being limited thereto.

The horizontal side may have a first curvature with which it is curved toward a direction in which the support substrate 145 is attached to the display panel 100, and the vertical side may have a second curvature with which it is curved toward a direction in which the support substrate 145 is attached to the display panel 100.

In a case where the horizontal and vertical sides of the support substrate 145 have the same degree of being curved, the first curvature and the second curvature can have the same value.

However, in a case where the horizontal and vertical sides of the support substrate 145 have different degrees of being curved, the first curvature and the second curvature may have different values.

In a case where the horizontal side and the vertical side of the support substrate 145 are curved, each of the spline areas SPA1 to SPA4 is a compound curvature area where the horizontal curve and the vertical curve meet with each other.

Therefore, each of the spline area SPA1 to SPA4 may have a third curvature, which is a compound curvature formed by the horizontal side with the first curvature and the vertical side with the second curvature meeting together.

In the support substrate 145, the first spline area SPA1 positioned on the upper left where the horizontal side and the vertical side meet together may have a third-first curvature with which the horizontal side of the first curvature and the vertical side of the second curvature meet together to be curved toward the upper left corner.

In the support substrate 145, the second spline area SPA2 positioned on the upper right where the horizontal side and the vertical side meet together may have a third-second curvature with which the horizontal side of the first curvature and the vertical side of the second curvature meet together to be curved toward the upper right corner.

In the support substrate 145, the third spline area SPA3 positioned on the lower right where the vertical side and the horizontal side meet together may have a third-third curvature with which the vertical side of the second curvature and the horizontal side of the first curvature meet together to be curved toward the lower right corner.

In the support substrate 145, the fourth spline area SPA4 positioned on the lower left where the vertical side and the horizontal side meet together may have a third-fourth curvature with which the vertical side of the second curvature and the horizontal side of the first curvature meet together to be curved toward the lower left corner.

As an example, the third-first curvature, the third-second curvature, the third-third curvature, and the third-fourth curvature may have the same value, without being limited thereto.

As an example, the third-first curvature, the third-second curvature, the third-third curvature, and the third-fourth curvature may have different values from each other, without being limited thereto. As an example, the third-first curvature, the third-second curvature, the third-third curvature, and the third-fourth curvature may have sequentially decreasing values. As an example, the third-first curvature, the third-second curvature, the third-third curvature, and the third-fourth curvature may have sequentially increasing values.

As an example, the third-first curvature may have a greater value than those of the third-second curvature, the third-third curvature, and the third-fourth curvature. As an example, the third-first curvature may have a smaller value than those of the third-second curvature, the third-third curvature, and the third-fourth curvature. As an example, the third-second curvature, the third-third curvature, and the third-fourth curvature may have the same value.

As an example, the third-second curvature may have a different value from those of the third-first curvature, the third-third curvature, and the third-fourth curvature. As an example, the third-first curvature, the third-third curvature, and the third-fourth curvature may have the same value. As an example, the third-second curvature may have a greater value than those of the third-first curvature, the third-third curvature, and the third-fourth curvature. As an example, the third-second curvature may have a smaller value than those of the third-first curvature, the third-third curvature, and the third-fourth curvature.

As an example, the third-third curvature may have a different value from those of the third-first curvature, the third-second curvature, and the third-fourth curvature. As an example, the third-first curvature, the third-second curvature, and the third-fourth curvature may have the same value. As an example, the third-third curvature may have a greater value than those of the third-first curvature, the third-second curvature, and the third-fourth curvature. As an example, the third-third curvature may have a smaller value than those of the third-first curvature, the third-second curvature, and the third-fourth curvature.

As an example, the third-fourth curvature may have a different value from those of the third-first curvature, the third-second curvature, and the third-third curvature. As an example, the third-first curvature, the third-second curvature, and the third-third curvature may have the same value. As an example, the third-fourth curvature may have a greater value than those of the third-first curvature, the third-second curvature, and the third-third curvature. As an example, the third-fourth curvature may have a smaller value than those of the third-first curvature, the third-second curvature, and the third-third curvature. The display device 1000 according to an exemplary embodiment of the present disclosure may have various curvatures not limited to the above. The display device 1000 according to an exemplary embodiment of the present disclosure may have various curvatures depending on, for example, differences in length or differences in the shape of free-form portion.

According to an exemplary embodiment of the present disclosure, the support substrate 145 may have hole patterns PT formed at at least one or each of the four corners, that is, the first spline area SPA1 to fourth spline area SPA1 to SPA4 having the third curvature of the compound curvature, thereby dispersing the tensile stress T in the active area to reduce or prevent cracks and displacements, and absorbing the compressive stress P in the non-active area to reduce or prevent the occurrence of wrinkles.

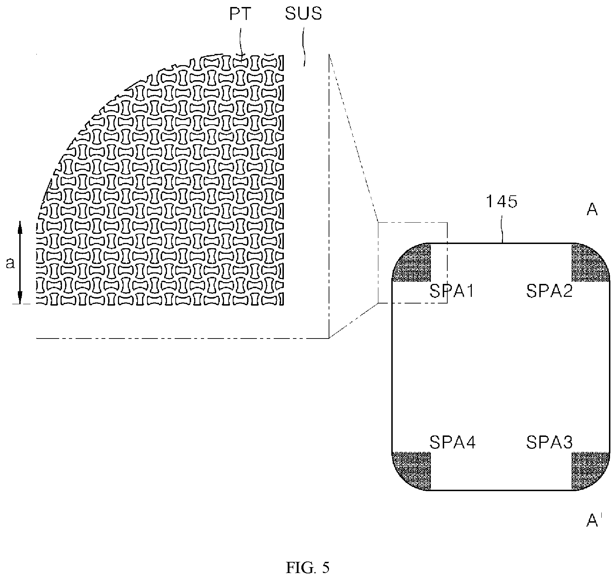

FIG. 5 is a view showing the configuration of a hole pattern formed in a support substrate according to an exemplary embodiment of the present disclosure.

Referring to FIG. 5, the support substrate 145 according to an exemplary embodiment of the present disclosure may have the hole patterns PT, each of which is formed in a respective one of the first spline area SPA1 to the fourth spline area SPA4.

The hole pattern PT may be formed by alternately forming horizontal holes along a horizontal direction and vertical holes along a vertical direction. The horizontal hole and the vertical hole may have, but is not limited to, a shape such as a rectangle, an ellipse, an ellipse or rectangle with the middle portion of one side or both sides partially recessed.

The support substrate 145 may include a back plate which reinforces the rigidity of the display panel 100.

As an example, the support substrate 145 may be formed of a metal material. The metal material may include, for example, stainless steel SUS. However, according to an exemplary embodiment of the present disclosure, the metal material is not limited to this.

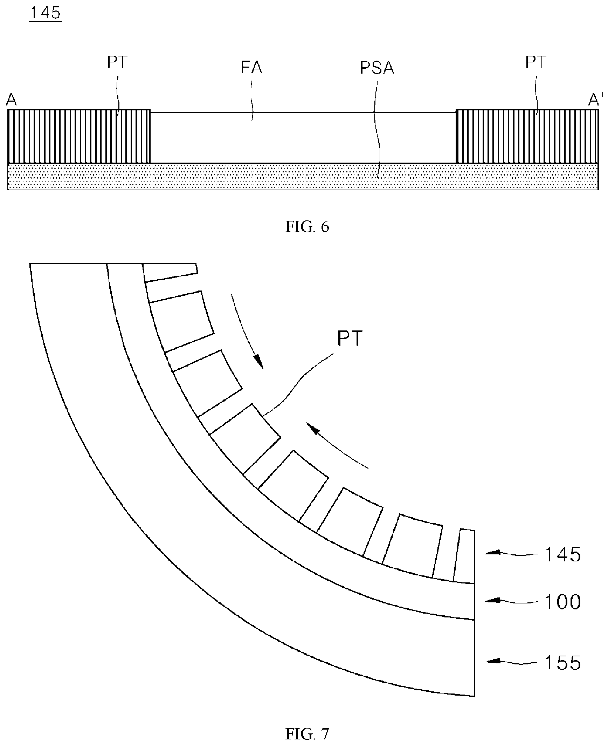

The support substrate 145 may have, as shown in FIG. 6, a flat area FA and a pattern area in which the hole pattern PT is formed. FIG. 6 is a cross-sectional view taken along line A-A' in FIG. 5. Each hole pattern PT may be formed in a respective one of the spline areas SPA1 to SPA4. As an example, the hole pattern PT may be not formed in the flat area FA. As an example, the pattern area may correspond to at least one or all of the spline areas SPA1 to SPA4. As an example, the pattern area may have a size equal to, greater than or smaller than that of the spline areas SPA1 to SPA4, without being limited thereto.

The flat area FA is an area corresponding to the active area AA of the display panel 100. Each hole pattern PT may have a portion corresponding to the non-active area NA of the display panel 100, and the remaining portion corresponding to the active area AA of the display panel 100, without being limited thereto. As an example, the entirety of the pattern area may correspond to the non-active area NA of the display panel 100. As an example, at least a portion of the flat area FA may correspond to the non-active area NA of the display panel 100, for example, between adjacent pattern areas.

As an example, each spline area SPA1 to SPA4 may have a first area corresponding to the active area AA, and a second area corresponding to the non-active area NA, without being limited thereto.

In this regard, as an example, the first area may have a greater surface area than the second area, without being limited thereto.

The second area may correspond to the bezel area in the non-active areas NA. The second area may overlap with the bezel area of the display panel 100.

Each hole pattern PT may be formed from a portion of the first area to the second area. For example, each hole pattern PT may partially overlap with the active area AA.

The first area may include a flat area and a pattern area in which the hole pattern is formed.

In the first area, the flat area may have a certain length a. For example, in the first area, the flat area may have a length of 0.8 millimeters mm to 1.2 millimeters mm, without being limited thereto. As an example, the flat area may have, for example, a length of 1.0 millimeter mm.

In each of the spline areas SPA1 to SPA4, the inner or outer diameter of the arc shape may range from 0.2 millimeters mm to 0.3 millimeters mm. For example, the inner diameter of the arc shape may be 0.2 millimeters mm, and the outer diameter of the arc shape may be 0.3 millimeters mm. For example, an arc with thickness like a donut (an annular arc) has two radius (the inner radius and the outer radius). These can be defined as the inner diameter and the outer diameter, respectively.

The support substrate 145 may be bonded to the display panel 100 via one of an optically clear adhesive (OCA), an optically clear resin (OCR), and a pressure sensitive adhesive (PSA). For example, the support substrate 145 may be bonded to the display panel 100 through the pressure-sensitive adhesive PSA disposed thereunder, as illustrated in FIG. 6. An embodiment of the present disclosure is not limited thereto. For example, the support substrate 145 may be bonded to the display panel 100 through an optically clear adhesive disposed thereon.

FIG. 7 is a drawing showing interactions between elements when pressure is generated on a support substrate according to an exemplary embodiment of the present disclosure.

Referring to FIG. 7, when the support substrate 145 according to the exemplary embodiment of the present disclosure is attached to the display panel 100, pressure is generated due to attachment-induced bending in each spline area SPA1 to SPA4, but the pressure is absorbed into the hole space by the hole pattern PT.

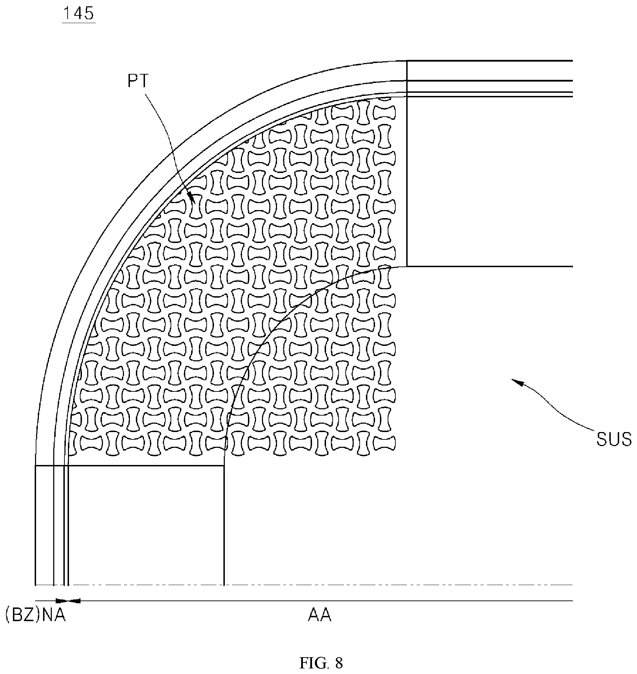

FIG. 8 is a view showing a hole pattern formed in an active area and a non-active area of a support substrate according to an exemplary embodiment of the present disclosure.

Referring to FIG. 8, the support substrate 145 according to an exemplary embodiment of the present disclosure may be formed of a metal material SUS, and the hole pattern PT may be formed in the spline area, without being limited thereto.

As an example, the hole pattern PT may be formed outward from the beginning portion of the spline area in the active area AA to the non-active area NA. In this regard, the non-active area NA may include the bezel area BZ.

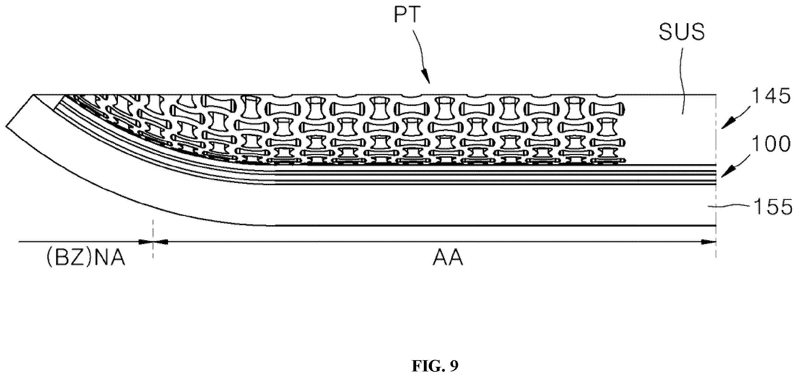

FIG. 9 is a view showing a cross-sectional structure of a support substrate according to an exemplary embodiment of the present disclosure.

Referring to FIG. 9, the support substrate 145 according to an exemplary embodiment of the present disclosure may have a flat area and a slightly curved bending area in the active area AA.

The hole pattern PT may be formed outward from a portion of the flat area of the active area AA, where the spline area begins or has not begun, to the non-active area NA.

The display panel 100 may be disposed in the lower side of the support substrate 145, and a cover member 155 may be disposed in the lower side of the display panel 100. The embodiments of the present disclosure are not limited to this. For example, in the display device according to an exemplary embodiment of the present disclosure, when the vertical positional relationship is reversed, the display panel 100 may be disposed in the upper side of the support substrate 145, and the cover member 155 may be disposed in the upper side of the display panel 100.

The support substrate 145 may have a bending area which is curved in the spline area. In this regard, the bending area may have the third curvature of a compound curvature with which the horizontal side of the support substrate 145 with the first curvature and the vertical side thereof with the second curvature meet together to be curved.

The display panel 100 and the cover member 155 may also be curved to correspond to the bending area of the support substrate 145. The display panel 100 may have a fourth curvature with which it is curved to correspond to the bending area of the support substrate 145. The cover member 155 may also have a fifth curvature with which it is curved to correspond to the bending area of the support substrate 145. The fourth curvature and the fifth curvature may have the same value. The fourth curvature and the fifth curvature may have different values from each other.

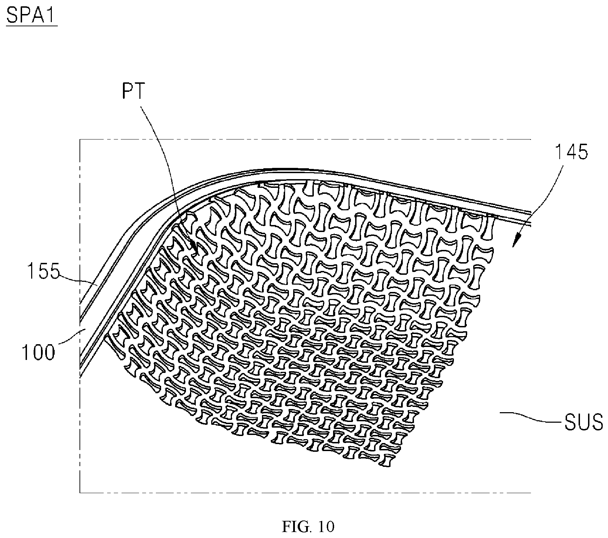

FIG. 10 is a view showing a hole pattern formed in a first spline area of a support substrate according to an exemplary embodiment of the present disclosure.

Referring to FIG. 10, in the support substrate 145 according to an exemplary embodiment of the present disclosure, the hole pattern PT may be formed outward of the arc shape in the first spline area SPA1.

In this regard, the support substrate 145 may be formed of a metal material SUS, and may have the hole pattern PT in which a plurality of holes are formed to penetrate through the metal material SUS in the first spline area SPA1. In the outward direction of the hole pattern PT, the display panel 100 and the cover member 155 may be arranged in succession, and disposed one above the other. The hole pattern PT may be formed in a shape that is curved outward with the third curvature of the compound curvature which the support substrate 145 has in the first spline area SPA1.

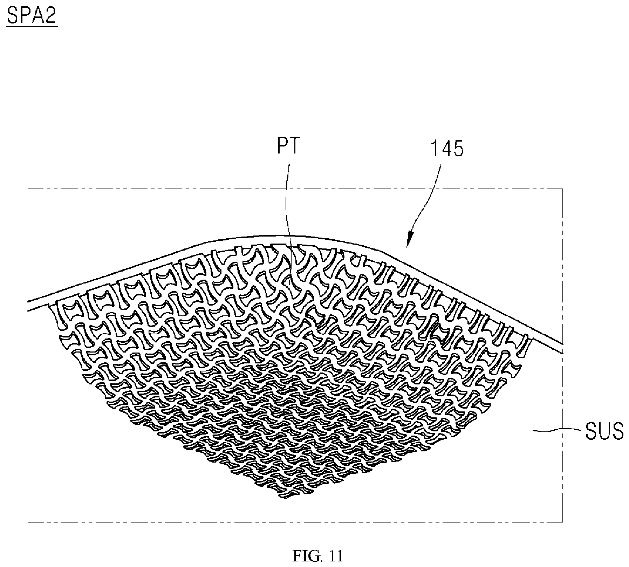

FIG. 11 is a view showing a hole pattern formed in a second spline area of a support substrate according to an exemplary embodiment of the present disclosure.

Referring to FIG. 11, in the support substrate 145 according to an exemplary embodiment of the present disclosure, the hole pattern PT may be formed outward of the arc shape by forming a plurality of holes to penetrate through the metal material SUS in the second spline area SPA2.

In thie regard, the hole pattern PT may be formed in a shape that is curved outward with the third curvature of the compound curvature which the support substrate 145 has in the second spline area SPA2.

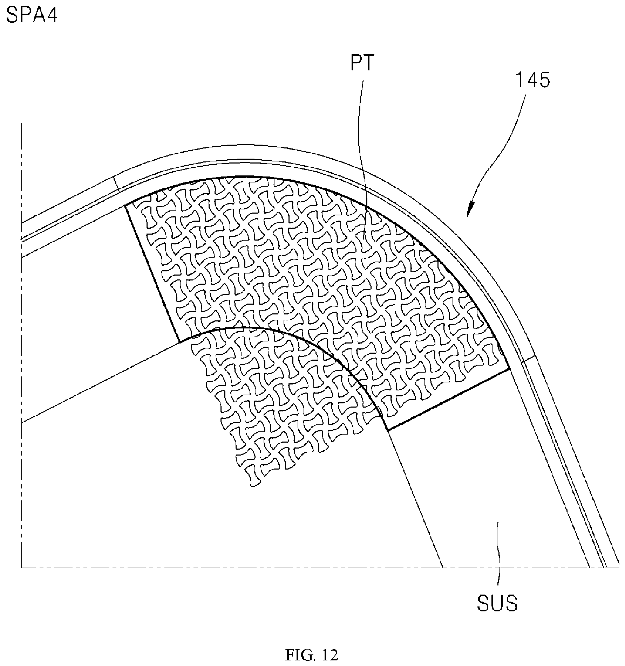

FIG. 12 is a view showing a hole pattern formed in a fourth spline area of a support substrate according to an exemplary embodiment of the present disclosure.

Referring to FIG. 12, in the support substrate 145 according to an exemplary embodiment of the present disclosure, the hole pattern PT may be formed outward of the arc shape by forming a plurality of holes to penetrate through the metal material SUS in the fourth spline area SPA4.

The fourth spline area SPA4 may have the third curvature of a compound curvature with which the horizontal side with the first curvature and the vertical side thereof with the second curvature meet together to be curved.

In this regard, the hole pattern PT may be formed in a shape that is curved outward with the third curvature of the compound curvature which the support substrate 145 has in the fourth spline area SPA4.

As described above, the support substrate 145 according to the exemplary embodiments of the present disclosure has the respective hole pattern PT in each of the spline areas SPA1 to SPA4, so that even if it is subjected to pressure applied during the attachment process with the display panel 100, the occurrence of wrinkle and displacement in the support substrate can be reduced or prevented through the absorption of the pressure by the hole pattern.

Meanwhile, the display panel 100 attached to the support substrate 145 according to an exemplary embodiment of the present disclosure may include, although not shown, a plurality of light-emitting elements in the active area AA.

The light-emitting element may be formed on a silicon wafer by a method such as Metal Organic Chemical Vapor Deposition (MOCVD), Chemical Vapor Deposition (CVD), Plasma-Enhanced Chemical Vapor Deposition (PECVD), Molecular Beam Epitaxy (MBE), Hydride Vapor Phase Epitaxy (HVPE), sputtering, or the like, but the embodiments of the present disclosure are not limited thereto.

The light-emitting element may include an anode electrode, a first semiconductor layer, an active layer, a second semiconductor layer, a cathode electrode, and a sealing film, but the embodiments of the present disclosure are not limited thereto. For example, the light-emitting element may not include the sealing film.

One of the first semiconductor layer and the second semiconductor layer may be implemented as a compound semiconductor of group III-V, group II-VI, or the like, and may be doped with an impurity (or dopant). For example, one of the first semiconductor layer and the second semiconductor layer may be a semiconductor layer doped with an n-type impurity, and the other thereof may be a semiconductor layer doped with a p-type impurity, but the embodiments of the present disclosure are not limited thereto. For example, at least one of the first semiconductor layer and the second semiconductor layer may be a layer where an n-type or p-type impurity is doped in a material such as gallium nitride (GaN), gallium phosphide (GaP), gallium arsenide phosphide (GaAsP), aluminum gallium indium phosphide (AlGaInP), indium aluminum phosphide (InAlP), aluminum gallium nitride (AlGaN), aluminum indium nitride (AlInN), aluminum indium gallium nitride (AlInGaN), aluminum gallium arsenide (AlGaAs), or gallium arsenide (GaAs), but the embodiments of the present disclosure are not limited thereto. For example, the n-type impurity may be silicon (Si), germanium (Ge), selenium (Se), carbon (C), tellurium (Te), tin (Sn), or the like, but the embodiments of the present disclosure are not limited thereto. For example, the p-type impurity may be magnesium (Mg), zinc (Zn), calcium (Ca), strontium (Sr), barium (Ba), beryllium (Be), or the like, but the embodiments of the present disclosure are not limited thereto.

The first semiconductor layer and the second semiconductor layer may be a nitride semiconductor containing an n-type impurity and a nitride semiconductor containing a p-type impurity, respectively, but the embodiments of the present disclosure are not limited thereto. For example, the first semiconductor layer may be a nitride semiconductor containing a p-type impurity, and the second semiconductor layer may be a nitride semiconductor containing an n-type impurity, but the embodiments of the present disclosure are not limited thereto.

The active layer may be disposed between the first semiconductor layer and the second semiconductor layer. The active layer may emit light by receiving holes and electrons from the first semiconductor layer and the second semiconductor layer. For example, the active layer may be configured in one of a single well structure, a multi-well structure, a single quantum well structure, a multi-quantum well (MQW) structure, a quantum dot structure, and a quantum wire structure, but the embodiments of the present disclosure are not limited thereto. For example, the active layer may be composed of indium gallium nitride (InGaN) or gallium nitride (GaN), but the embodiments of the present disclosure are not limited thereto.

As another example, the active layer may include a multi-quantum well (MQW) structure having a well layer and a barrier layer having a higher band gap than the well layer. For example, the active layer may be composed of InGaN as a well layer and an AlGaN layer as a barrier layer, but the embodiments of the present disclosure are not limited thereto.

For example, the anode electrode may be composed of gold (Au), tin (Sn), tungsten (W), silicon (Si), silver (Ag), titanium (Ti), iridium (Ir), chromium (Cr), indium (In), zinc (Zn), lead (Pb), nickel (Ni), platinum (Pt), and copper (Cu), or any alloy thereof, but the embodiments of the present disclosure are not limited thereto.

The cathode electrode may be configured with a material such as indium tin oxide (ITO), indium zinc oxide (IZO), indium gallium zinc oxide (IGZO), or the like, but the embodiments of the present disclosure are not limited thereto.

The sealing film may be disposed on at least a portion of the first semiconductor layer, the active layer, the second semiconductor layer, the anode electrode, and the cathode electrode. For example, the sealing film may surround at least a portion of the first semiconductor layer, the active layer, the second semiconductor layer, the anode electrode, and the cathode electrode. For example, the sealing film may be configured with an insulating material such as silicon nitride (SiNx) or silicon oxide (SiOx), but the embodiments of the present disclosure are not limited thereto.

For example, the light-emitting element may have a vertical structure, a lateral structure or a flip chip structure.

On the light-emitting element in the active area, there may be disposed a black matrix. The black matrix can reduce or prevent light leakage between neighboring light-emitting elements.

On the black matrix in the active area, there may be disposed a cover layer. The cover layer can protect the configuration under the cover layer. For example, the cover layer may be composed of an organic insulating material, but the embodiments of the present disclosure are not limited thereto. For example, the cover layer may be configured with a photo resist, polyimide (PI), or photo acryl-based material, or the like, but the embodiments of the present disclosure are not limited thereto. For example, the cover layer may be an overcoating layer or an insulating layer, but the embodiments of the present disclosure are not limited thereto.

As shown in FIG. 2, on a cover layer of the display panel 100, the polarization layer 293 may be disposed via a first adhesive layer. On the polarization layer, the cover member 155 may be disposed via the second adhesive layer 295. For example, the first adhesive layer and the second adhesive layer 295 may include an optically clear adhesive (OCA), an optically clear resin (OCR), or a pressure sensitive adhesive (PSA), but the embodiments of the present disclosure are not limited thereto.

Although not shown in the drawings, in the second non-active area NA2, there may be disposed a plurality of pad electrodes. On the plurality of pad electrodes an adhesive layer ACF may be disposed. The adhesive layer ACF may be an adhesive layer in which conductive balls are dispersed in an insulating material, but the embodiments of the present disclosure are not limited thereto. In a case where heat or pressure is applied to the adhesive layer ACF, the conductive balls can be electrically connected in the part where the heat or pressure is applied, thereby providing conductive property. By disposing the adhesive layer ACF between the plurality of pad electrodes and the flexible circuit board (or flexible film) 157, the flexible circuit board (or flexible film) 157 can be attached or bonded to the plurality of pad electrodes. For example, the adhesive layer ACF may be an anisotropic conductive film ACF, but the embodiments of the present disclosure are not limited thereto.

On the adhesive layer ACF the flexible circuit board (or flexible film) 157 may be disposed. The flexible circuit board (or flexible film) 157 may be electrically connected to the plurality of pad electrodes through the adhesive layer ACF.

According to an exemplary embodiment of the present disclosure, when manufacturing the display device 1000, the support substrate 145 having the hole patterns formed in the respective corners can be bonded to the display panel 100.

Thereby, during the bonding of the support substrate 145 and the display panel 100, pressure is absorbed by the hole patterns PT formed in the respective spline areas SPA1 to SPA4 of the support substrate 145, thus reducing or preventing the occurrence of wrinkle or displacement in the support substrate 145.

Accordingly, it is possible to reduce or prevent product defects during the manufacturing of the display device 1000, and therefore, to produce an effect of realizing a narrow bezel of a display device.

And, according to an exemplary embodiment of the present disclosure, it is possible to improve product quality, and therefore, to have an ability to provide a display device with high product reliability.

A display device according to various exemplary embodiments of the present disclosure may be described as follows.

A display device according to an exemplary embodiment of the present disclosure may include a display panel including four corners, each having an arc shape; a cover member disposed on the display panel to protect the display panel; and a support substrate disposed under the display panel to support the display panel, and the support substrate may have four spline areas respectively corresponding to the four corners of the display panel, each of the spline area having a respective hole pattern formed therein.

The support substrate may have two horizontal sides parallel to each other, and two vertical sides parallel to each other.

The horizontal side may have a first curvature with which it is curved toward a direction in which the support substrate is attached to the display panel, and the vertical side may have a second curvature with which it is curved toward a direction in which the support substrate is attached to the display panel.

The first curvature and the second curvature may have a same value.

The first curvature and the second curvature may have different values from each other.

Each of the spline areas may have a third curvature, which is a compound curvature formed by an intersection of the horizontal side with the first curvature and the vertical side with the second curvature.

The hole pattern may be formed by alternately forming horizontal holes along a horizontal direction and vertical holes along a vertical direction.

The support substrate may include a back plate reinforcing a rigidity of the display panel.

The support substrate may be formed of a metal material.

The metal material may include stainless steel.

The support substrate may include a flat area and a pattern area in which a hole pattern is formed.

The display panel includes an active area and a non-active area, and each of the spline areas may have a first area corresponding to the active area, and a second area corresponding to the non-active area.

The hole pattern may be formed from a portion of the first area to the second area.

The first area may include a flat area and a pattern area in which the hole pattern is formed.

The flat area in the first area may have a length of 0.8 millimeters mm to 1.2 millimeters mm.

An inner or outer diameter of an arc shape in each of the spline areas ranges from 0.2 millimeters mm to 0.3 millimeters mm.

The support substrate may be bonded to the display panel through one of an optically clear adhesive, an optically clear resin, and a pressure sensitive adhesive.

Although the present disclosure has been described with reference to the drawings provided as examples, the present disclosure is not limited to the drawings and embodiments disclosed in this disclosure, and it is obvious that various modifications can be made by those skilled in the art without departing from the scope of the technical idea of the present invention. In addition, even if operational effects according to the configuration of the present disclosure were not explicitly described while explaining the embodiments of the present disclosure, it is natural that the effects that can be predicted by that configuration should also be acknowledged.

### [Explanation of Reference symbols]

| | | | |
|---|---|---|---|
| 1000 : | Display device | 100: | Display panel |
| 110 : | Substrate | 145: | Support substrate |
| 155 : | Cover member | 157: | Flexible printed circuit board |
| 160 : | Printed circuit board | 293 : | Polarization layer |
| 295: | Adhesive layer | 1005: | Case part |
| AA: | Active area | NA: | Non-active area |
| ~SPA4 : | Spline area | BZ : | Bezel area |
| BA: | Bending area | PT: | Hole pattern |
| SUS: | Stainless steel | FA: | Flat area |
| PSA : | Pressure-sensitive adhesive | | |

## Claims

1. A display device comprising:
a display panel; and
a support substrate disposed under the display panel to support the display panel,
wherein the support substrate has a spline area in an arc shape at each of four corners, each of the spline areas having a hole pattern formed therein.

2. The display device of claim 1, wherein the support substrate has two horizontal sides parallel to each other, and two vertical sides parallel to each other, and
wherein the horizontal sides have the same length as or a different length from that of the vertical sides.

3. The display device of claim 2, wherein the horizontal side has a first curvature with which it is bent in a direction from the display panel to the support substrate, and
wherein the vertical side has a second curvature with which it is bent in a direction from the display panel to the support substrate.

4. The display device of claim 3, wherein the first curvature and the second curvature have a same value.

5. The display device of claim 3, wherein the first curvature and the second curvature have different values from each other.

6. The display device of claim 3 or 4, wherein each of the spline areas has a third curvature, which is a compound curvature formed by an intersection of the horizontal side with the first curvature and the vertical side with the second curvature.

7. The display device of any preceding claim, wherein the hole pattern is formed by alternately forming first holes along a first direction and second holes along a second direction perpendicular to the first direction; and optionally wherein the first holes and the second holes are alternately arranged in the first direction and the second direction.

8. The display device of claim 7, wherein the support substrate has two horizontal sides parallel to the first direction, and two vertical sides parallel to the second direction.

9. The display device of claim 7 or 8, wherein each of the first holes and the second holes has a rectangle shape, an ellipse shape, or an ellipse shape or rectangle shape with a middle portion of one long side or both long sides partially recessed.

10. The display device of any preceding claim, wherein the support substrate includes a back plate reinforcing a rigidity of the display panel and/or
wherein the support substrate is formed of a metal material, and
wherein the metal material includes stainless steel.

11. The display device of any preceding claim, wherein the support substrate includes a flat area and a pattern area in which the hole pattern is formed.

12. The display device of claim 11, wherein the display panel includes an active area and a non-active area, and
wherein each of the spline areas has a first area corresponding to the active area, and a second area corresponding to the non-active area.

13. The display device of claim 12, wherein the hole pattern is formed from a portion of the first area to the second area; and optionally
wherein the first area includes a flat area and a pattern area in which the hole pattern is formed.

14. The display device of any preceding claim, wherein the support substrate is bonded to the display panel through one of an optically clear adhesive, an optically clear resin, and a pressure sensitive adhesive.

15. The display device of any preceding claim, further comprising:
a cover member disposed on the display panel to protect the display panel.
